# EUROPEAN PATENT APPLICATION

(11) **EP 4 776 459 A1**
(43) Date of publication of application: **15.07.2026**
(21) Application number: 26150846.9
(22) Date of filing: 08.01.2026
(51) Int. Cl.: H02J 3/38, H02J 3/388, H02J 9/06, H02J 3/32

(54) **POWER SUPPLY SYSTEM, METHOD FOR CONTROLLING OFF-GRID TO ON-GRID SWITCHING OF POWER SUPPLY SYSTEM, AND INVERTER**

(30) Priority: 09.01.2025 CN 202510038513
(71) Applicant: Huawei Technologies Co., Ltd., Shenzhen, Guangdong 518129 (CN)
(72) Inventor: ZHANG, Peng, Shenzhen, Guangdong, 518129 (CN); TANG, Qidi, Shenzhen, Guangdong, 518129 (CN); FENG, Yupeng, Shenzhen, Guangdong, 518129 (CN); LIAO, Weichao, Shenzhen, Guangdong, 518129 (CN); YANG, Boping, Shenzhen, Guangdong, 518129 (CN)
(74) Representative: Maiwald GmbH

(57) **Abstract**

Embodiments of this application provide a power supply system, a method for controlling off-grid to on-grid switching of the power supply system, and an inverter. The power supply system includes the inverter and an on/off-grid controller. A direct current end of the inverter is connected to a direct current power supply, and an alternating current end of the inverter is connected to an inverter port of the on/off-grid controller. A backup port and a power grid port of the on/off-grid controller are respectively connected to a backup load and a power grid. The backup port is connected to the inverter port, and the inverter port is connected to the power grid port through a relay. The inverter receives power grid voltage information, and adjusts an output voltage amplitude and an output voltage frequency based on the power grid voltage information. When a difference between the output voltage amplitude of the inverter and a power grid voltage amplitude, a difference between the output voltage frequency of the inverter and a power grid voltage frequency, and a difference between an output voltage phase of the inverter and a power grid voltage phase are all less than a specified threshold, a control chip of the on/off-grid controller controls the relay to be turned on, and outputs a high-level signal or a low-level signal to the inverter via a hardware signal line, so that the inverter switches to a current source control mode.

## Description

### TECHNICAL FIELD

This application relates to the field of power electronics, and in particular, to a power supply system, a method for controlling off-grid to on-grid switching of the power supply system, and an inverter.

### BACKGROUND

With development of the photovoltaic energy storage and power generation industry, home green power solutions are gradually approaching completion. To ensure power supply continuity and reliability of important loads of users, photovoltaic energy storage inverters usually support on-grid connection, off-grid connection, and parallel connection functions. There are two types of power supply systems in terms of an architecture. One is an integrated photovoltaic energy storage machine with an independent on-grid port and off-grid port. The other is a backup system including a split-type photovoltaic energy storage inverter and an on/off-grid switching device. However, for the foregoing two power supply systems in off-grid to on-grid switching, problems in synchronization between an output voltage of a photovoltaic energy storage inverter and a power grid voltage, power supply continuity for loads during on/off-grid switching, and compliance of a grid connection with a power grid standard requirement need to be resolved.

### SUMMARY

This application provides a power supply system, a method for controlling off-grid to on-grid switching of the power supply system, and an inverter, to avoid a large current surge caused by an excessive voltage difference between a power grid and an inverter port, resolve a problem of a circulating current, and improve power supply continuity for a backup load during off-grid to on-grid switching.

According to a first aspect, this application provides a power supply system. The power supply system includes an inverter and an on/off-grid controller. A direct current end of the inverter is configured to connect to a direct current power supply, and an alternating current end of the inverter is connected to an inverter port of the on/off-grid controller. The on/off-grid controller includes a relay and a control chip, a backup port of the on/off-grid controller is configured to connect to a backup load, and a power grid port of the on/off-grid controller is configured to connect to a power grid. The backup port is connected to the inverter port, and the inverter port of the on/off-grid controller is connected to the power grid port through the relay. The inverter is configured to supply power to the backup load when the inverter is in a voltage source control mode and the relay is turned off. The inverter is further configured to receive power grid voltage information, and adjust an output voltage amplitude and an output voltage frequency based on the power grid voltage information. The control chip is configured to: when a difference between the output voltage amplitude of the inverter and a power grid voltage amplitude, a difference between the output voltage frequency of the inverter and a power grid voltage frequency, and a difference between an output voltage phase of the inverter and a power grid voltage phase are all less than a specified threshold, control the relay to be turned on, and simultaneously output a high-level signal or a low-level signal to the inverter via a hardware signal line, so that the inverter switches to a current source control mode, where the inverter or the power grid is configured to jointly supply power to the backup load.

In this implementation, the control chip in the on/off-grid controller determines, based on the amplitude difference, the frequency difference, the phase difference, and the like between an output voltage of the inverter and a power grid voltage, whether to switch the inverter from an off-grid mode to an on-grid mode. This avoids a large current surge caused by an excessive voltage difference between the power grid and the inverter port, and resolves a problem of a circulating current during off-grid to on-grid switching of inverters connected in parallel, thereby improving device safety. In addition, when the relay is turned on, the high-level signal or the low-level signal is output to the inverter via the hardware signal line, and a transmission delay of the hardware signal line is within 1 ms. This greatly improves a transmission speed of the high-level signal or the low-level signal, so that the inverter quickly switches to the current source control mode and supplies power to the backup load, thereby improving power supply continuity for the backup load during off-grid to on-grid switching.

In a possible implementation, the control chip is configured to send the power grid voltage information to the inverter when the relay is turned off and the power grid voltage amplitude reaches a specified voltage range. After receiving the power grid voltage information, the inverter switches to a virtual synchronous generator control mode, and adjusts the output voltage amplitude and the output voltage frequency based on the power grid voltage information. The on/off-grid controller determines, by using the control chip based on the amplitude difference, the frequency difference, the phase difference, and the like between the output voltage of the inverter and the power grid voltage, whether to switch the inverter from the off-grid mode to the on-grid mode. This avoids a large current surge caused by an excessive voltage difference between the power grid and the inverter port.

In a possible implementation, the control chip is configured to send the power grid voltage information to the inverter after the relay is turned off, the power grid voltage amplitude reaches the specified voltage range, and the power grid voltage frequency reaches and remains within a specified frequency range for a specified time interval. Herein, accuracy of determining whether an on-grid condition is met is improved, thereby avoiding grid connection under an unstable working condition of the power grid.

In a possible implementation, the relay includes a first relay and a second relay that are connected in series. The first relay is connected to the inverter port, the second relay is connected to the power grid port, and a maximum allowable impulse current of the second relay is greater than a maximum allowable impulse current of the first relay. Not all relays in the on/off-grid controller have high impulse current resistance, to reduce device costs.

In a possible implementation, the control chip is further configured to control the first relay to be turned on after the inverter receives the power grid voltage information. The control chip is further configured to control the second relay to be turned on when the difference between the output voltage amplitude of the inverter and the power grid voltage amplitude, the difference between the output voltage frequency of the inverter and the power grid voltage frequency, and the difference between the output voltage phase of the inverter and the power grid voltage phase are all less than the specified threshold. The two relays are not turned on at the same time, to protect a relay with low impulse current resistance.

In a possible implementation, the power supply system includes a plurality of inverters, and alternating current ends of the plurality of inverters are connected in parallel and then connected to the inverter port of the on/off-grid controller through an on-grid point. The control chip is further configured to: when a difference between an on-grid point voltage amplitude and the power grid voltage amplitude, a difference between an on-grid point voltage frequency and the power grid voltage frequency, and a difference between an on-grid point voltage phase and the power grid voltage phase are all less than the specified threshold, control the relay to be turned on, and simultaneously output the high-level signal or the low-level signal to the inverter via the hardware signal line, so that the plurality of inverters switch to the current source control mode, and the plurality of inverters or the power grid is configured to jointly supply power to the backup load. It is determined, based on the amplitude difference, the frequency difference, the phase difference, and the like between an on-grid point voltage and the power grid voltage, whether the inverter switches from the off-grid mode to the on-grid mode. This avoids a large current surge caused by an excessive voltage difference between the power grid and the inverter port, and resolves a problem of a circulating current during off-grid to on-grid switching of the inverter, thereby improving device safety.

In a possible implementation, a non-backup port of the on/off-grid controller is configured to connect to a non-backup load, and the non-backup port is connected to the power grid port. The inverter is further configured to after the inverter switches to the current source control mode, enable the inverter or the power grid to jointly supply power to the backup load and the non-backup load.

According to a second aspect, this application provides a method for controlling off-grid to on-grid switching of a power supply system. The method includes: Power grid voltage information is sent to an inverter when a relay is turned off and a power grid voltage amplitude reaches a specified voltage range, so that the inverter adjusts an output voltage amplitude and an output voltage frequency based on the power grid voltage information. When a difference between the output voltage amplitude of the inverter and the power grid voltage amplitude, a difference between the output voltage frequency of the inverter and a power grid voltage frequency, and a difference between an output voltage phase of the inverter and a power grid voltage phase are all less than a specified threshold, the relay is controlled to be turned on, and a high-level signal or a low-level signal is simultaneously output to the inverter via a hardware signal line, so that the inverter switches to a current source control mode. A direct current end of the inverter is configured to connect to a direct current power supply, and an alternating current end of the inverter is connected to a power grid through the relay.

In this implementation, it is determined, based on the amplitude difference, the frequency difference, the phase difference, and the like between an output voltage of the inverter and a power grid voltage, whether the inverter switches from an off-grid mode to an on-grid mode. This avoids a large current surge caused by an excessive voltage difference between the power grid and an inverter port, and resolves a problem of a circulating current during off-grid to on-grid switching of inverters connected in parallel, thereby improving device safety. In addition, when the relay is turned on, the high-level signal or the low-level signal is output to the inverter via the hardware signal line, and a transmission delay of the hardware signal line is within 1 ms. This greatly improves a transmission speed of an on-grid signal, so that the inverter quickly switches to the current source control mode and supplies power to a backup load, thereby improving power supply continuity for the backup load.

In a possible implementation, that the power grid voltage information is sent to the inverter when the relay is turned off and the power grid voltage amplitude reaches the specified voltage range includes: The power grid voltage information is sent to the inverter after the relay is turned off, the power grid voltage amplitude reaches the specified voltage range, and the power grid voltage frequency reaches and remains within a specified frequency range for a specified time interval. Herein, accuracy of determining whether an on-grid condition is met is improved, thereby avoiding grid connection under an unstable working condition of the power grid.

In a possible implementation, the relay includes a first relay and a second relay that are connected in series, and a maximum allowable impulse current of the second relay is greater than a maximum allowable impulse current of the first relay. The method includes: The power grid voltage information is sent to the inverter when the first relay and the second relay are turned off and the power grid voltage amplitude reaches the specified voltage range. Not all relays in the on/off-grid controller have high impulse current resistance, to reduce device costs.

In a possible implementation, the method includes: The first relay is controlled to be turned on after the inverter receives the power grid voltage information. The second relay is controlled to be turned on when the difference between the output voltage amplitude of the inverter and the power grid voltage amplitude, the difference between the output voltage frequency of the inverter and the power grid voltage frequency, and the difference between the output voltage phase of the inverter and the power grid voltage phase are all less than the specified threshold. The two relays are not turned on at the same time, to protect a relay with low impulse current resistance.

According to a third aspect, this application provides an inverter. The inverter includes an inverter circuit, an on-grid relay, and an off-grid relay. A direct current end of the inverter is configured to connect to a direct current power supply, and an on-grid port of the inverter is connected to a power grid. An off-grid port of the inverter is configured to connect to a backup load, and an output end of the inverter circuit is connected to the on-grid port through the on-grid relay. The output end of the inverter circuit is connected to the off-grid port through the off-grid relay. The inverter is configured to supply power to the backup load when the inverter is in a voltage source control mode, the off-grid relay is turned on, and the on-grid relay is turned off. The inverter is further configured to adjust an output voltage amplitude and an output voltage frequency at the off-grid port based on power grid voltage information. The inverter is further configured to: when a difference between the output voltage amplitude at the off-grid port and a power grid voltage amplitude, a difference between the output voltage frequency at the off-grid port and a power grid voltage frequency, and a difference between an output voltage phase at the off-grid port and a power grid voltage phase are all less than a specified threshold, control the on-grid relay to be turned on, and switch to a current source control mode, where the inverter or the power grid is configured to jointly supply power to the backup load.

In this implementation, it is determined, based on the amplitude difference, the frequency difference, the phase difference, and the like between an output voltage at the off-grid port and a power grid voltage, whether the inverter switches from an off-grid mode to an on-grid mode. This avoids a large current surge caused by an excessive difference between the power grid voltage and the output voltage at the off-grid port, and resolves a problem of a circulating current during off-grid to on-grid switching of inverters connected in parallel, thereby improving device safety. In addition, when the relay is turned on, the inverter is controlled to switch to the current source control mode and supply power to the backup load, thereby improving power supply continuity for the backup load.

In a possible implementation, the inverter is further configured to: when the inverter is in the voltage source control mode, the off-grid relay is turned on, the on-grid relay is turned off, and the power grid voltage amplitude reaches a specified voltage range, adjust the output voltage amplitude and the output voltage frequency at the off-grid port based on the power grid voltage information. The inverter adjusts the output voltage amplitude and the output voltage frequency based on the power grid voltage information, and determines, based on the amplitude difference, the frequency difference, the phase difference, and the like between the output voltage at the off-grid port and the power grid voltage, whether to switch from the off-grid mode to the on-grid mode. This avoids a large current surge caused by an excessive difference between the power grid voltage and the output voltage at the off-grid port.

In a possible implementation, the inverter is further configured to: when the inverter is in the voltage source control mode, the off-grid relay is turned on, and the on-grid relay is turned off and after the power grid voltage amplitude reaches the specified voltage range, the power grid voltage frequency reaches and remains within a specified frequency range for a specified time interval, adjust the output voltage amplitude and the output voltage frequency at the off-grid port based on the power grid voltage information. Herein, accuracy of determining whether an on-grid condition is met is improved, thereby avoiding grid connection under an unstable working condition of the power grid.

### BRIEF DESCRIPTION OF DRAWINGS

FIG. 1 is a diagram of an application scenario of a power supply system according to this application;
FIG. 2 is a diagram of another application scenario of a power supply system according to this application;
FIG. 3 is a diagram of another application scenario of a power supply system according to this application;
FIG. 4 is a schematic of a hardware circuit of an on/off-grid controller according to this application;
FIG. 5 is a schematic of another hardware circuit of an on/off-grid controller according to this application;
FIG. 6 is a schematic flowchart of a method for controlling off-grid to on-grid switching of a power supply system according to this application; and
FIG. 7 is a diagram of an application scenario of an inverter according to this application.

### DESCRIPTION OF EMBODIMENTS

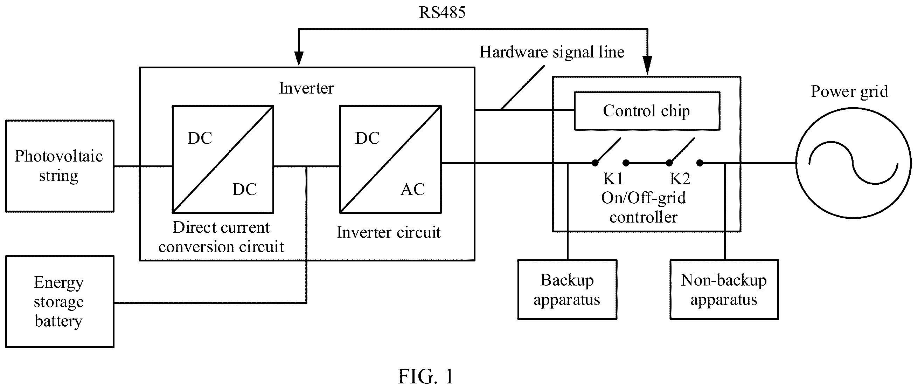

FIG. 1 is a diagram of an application scenario of a power supply system according to this application. The power supply system provided in this application may include an inverter and an on/off-grid controller. A direct current end of the inverter is configured to connect to a direct current power supply, and an alternating current end of the inverter is connected to an inverter port of the on/off-grid controller. Specifically, the direct current power supply may be a photovoltaic string, and the inverter may include a direct current conversion circuit and an inverter circuit. An input end of the direct current conversion circuit is connected to the photovoltaic string, an output end of the direct current conversion circuit is connected to an input end of the inverter circuit, and an output end of the inverter circuit is connected to the inverter port of the on/off-grid controller. The on/off-grid controller includes a relay and a control chip. A backup port and a non-backup port of the on/off-grid controller are respectively configured to connect to a backup load and a non-backup load, and a power grid port of the on/off-grid controller is configured to connect to a power grid. The backup port is connected to the inverter port, the non-backup port is connected to the power grid port, and the inverter port of the on/off-grid controller is connected to the power grid port through the relay.

Herein, in the power supply system shown in FIG. 1, when the relay is turned on and the inverter is connected to the power grid, the inverter may boost, by using the direct current conversion circuit, a direct current provided by the photovoltaic array, and perform inversion conversion on a boosted direct current by using the inverter circuit. Both an alternating current obtained through inversion conversion by the inverter or an alternating current from the power grid may supply power to the backup load and the non-backup load. When the relay is turned off and the inverter is off-grid, the inverter may boost, by using the direct current conversion circuit, a direct current provided by the photovoltaic array, and perform inversion conversion on a boosted direct current by using the inverter circuit. In this case, an alternating current obtained through inversion conversion is output to the backup load for power supply, and the non-backup load is not powered. In a home power supply scenario, the backup load may be an important load in a home of a user, for example, a household appliance or an alarm device, and is not powered off when the power grid has no power. The non-backup load may be a non-important load in the home of the user, for example, a charging pile, and is not powered when the power grid has no power, to ensure that the backup load can be powered for a longer time.

In some feasible implementations, still refer to FIG. 1. The direct current power supply may further include an energy storage battery. An output end of the energy storage battery may be connected to the output end of the direct current conversion circuit in the inverter. The energy storage battery may provide a direct current for the inverter circuit. The inverter circuit performs inversion conversion on the direct current provided by the energy storage battery, and outputs an alternating current obtained through the inversion conversion to the backup load and the non-backup load for power supply.

In the application scenario shown in FIG. 1, during off-grid running of the inverter, the on/off-grid controller detects a power grid voltage by using the control chip, and if the power grid voltage meets an on-grid condition, controls the inverter to switch from an off-grid mode to an on-grid mode. In a currently used method for off-grid to on-grid switching, in a process of controlling a relay to be turned on, a large current surge caused by an excessive voltage difference between a power grid and an inverter port cannot be avoided, and a problem of a circulating current during off-grid to on-grid switching of inverters that are connected in parallel cannot be avoided, thus causing damage to a device. In addition, in the process of controlling the inverter to switch from the off-grid mode to the on-grid mode, power supply continuity of an important load such as a backup load is not considered, so that power supply reliability of the backup load is poor.

In the power supply system provided in this application, during off-grid running of the inverter, the relay in the on/off-grid controller is turned off, and the inverter is in a voltage source control mode, and converts a direct current from the direct current power supply into an alternating current to supply power to the backup load. Specifically, refer to FIG. 1 again. The relay in the on/off-grid controller may include two relays, for example, may include a first relay and a second relay (for ease of description, which may be respectively referred to as a relay K1 and a relay K2) that are connected in series. The relay K1 is connected to the inverter port, and the relay K2 is connected to the power grid port. During off-grid running of the inverter, the relay K1 and the relay K2 in the on/off-grid controller are turned off, and the inverter is in the voltage source control mode and supplies power only to the backup load. Then, the inverter may receive power grid voltage information, and adjust an output voltage amplitude and an output voltage frequency based on the power grid voltage information. The power grid voltage information may come from the control chip or another device, and include a power grid voltage amplitude, a power grid voltage frequency, and a power grid voltage phase. The control chip in the on/off-grid controller is configured to: when a difference between the output voltage amplitude of the inverter and the power grid voltage amplitude, a difference between the output voltage frequency of the inverter and the power grid voltage frequency, and a difference between an output voltage phase of the inverter and a power grid voltage phase are all less than a specified threshold, control the relay K1 and the relay K2 to be turned on, and simultaneously output a high-level signal or a low-level signal to the inverter via a hardware signal line, so that the inverter switches from the voltage source control mode to a current source control mode. For example, a high-level signal is used as an on-grid signal. The high-level signal is output to the inverter via the hardware signal line, so that the inverter switches to the current source control mode. During grid connection, the inverter or the power grid supplies power to the backup load and the non-backup load. Herein, the on/off-grid controller determines, by using the control chip based on the amplitude difference, the frequency difference, the phase difference, and the like between an output voltage of the inverter and a power grid voltage, whether to switch the inverter from the off-grid mode to the on-grid mode. This avoids a large current surge caused by an excessive voltage difference between the power grid and the inverter port, and resolves a problem of a circulating current during off-grid to on-grid switching of inverters connected in parallel, thereby improving device safety. In addition, when the relay is turned on, the high-level signal or the low-level signal is output to the inverter via the hardware signal line, and a transmission delay of the hardware signal line is within 1 ms. This greatly improves a transmission speed of the high-level signal or the low-level signal, so that the inverter quickly switches to the current source control mode and supplies power to the backup load, thereby improving power supply continuity for the backup load during off-grid to on-grid switching.

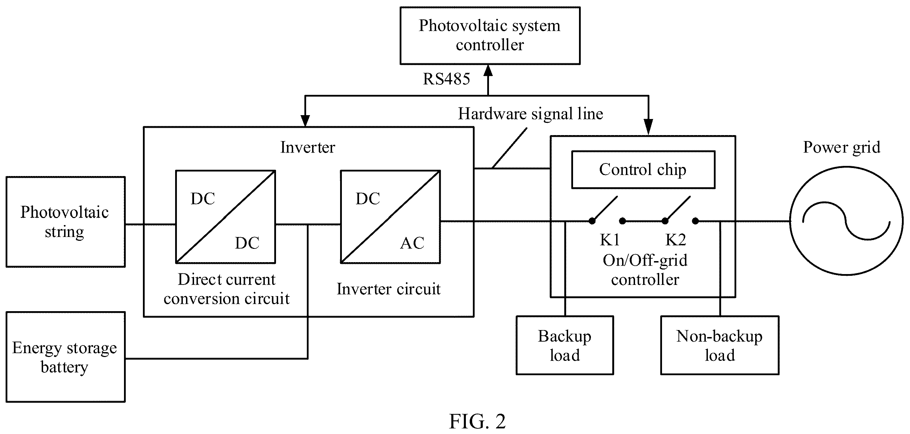

In some feasible implementations, the power supply system includes a photovoltaic system controller. FIG. 2 is a diagram of another application scenario of a power supply system according to this application. As shown in FIG. 2, the power supply system includes a photovoltaic system controller, and the photovoltaic system controller may communicate with an on/off-grid controller and an inverter via a serial port. For example, the on/off-grid controller and inverter are communicatively connected to the photovoltaic system controller via one RS485 link. The photovoltaic system controller is mainly responsible for functions such as communication transmission, power scheduling, and information reporting in the power supply system. For example, the on/off-grid controller may send power grid voltage information to the inverter by using the photovoltaic system controller.

In some feasible implementations, the inverter may receive the power grid voltage information from the on/off-grid controller. Specifically, the on/off-grid controller detects a power grid voltage by using a control chip. When the inverter is in a voltage source control mode, a relay is turned off, and it is detected that a power grid voltage amplitude reaches a specified voltage range, the control chip determines that a current power grid voltage meets an on-grid condition, and sends power grid voltage information to the inverter, so that the inverter adjusts an output voltage amplitude and an output voltage frequency based on the power grid voltage information. The power supply system shown in FIG. 2 is used as an example. The on/off-grid controller detects a power grid voltage by using the control chip. When the inverter is in the voltage source control mode, the relay is turned off, and it is detected that a power grid voltage amplitude reaches the specified voltage range, the control chip determines that a current power grid voltage meets the on-grid condition, and sends power grid voltage information to the photovoltaic system controller, so as to send the power grid voltage information to the inverter by using the photovoltaic system controller. After receiving the power grid voltage information, the inverter switches to a virtual synchronous generator control mode, and adjusts an output voltage amplitude and an output voltage frequency based on the power grid voltage information. Then, the on/off-grid controller determines, by using the control chip based on an amplitude difference, a frequency difference, a phase difference, and the like between an output voltage of the inverter and a power grid voltage, whether to switch the inverter from an off-grid mode to an on-grid mode. This avoids a large current surge caused by an excessive voltage difference between the power grid and the inverter port.

In some feasible implementations, the on/off-grid controller detects a power grid voltage by using the control chip. When the inverter is in the voltage source control mode, the relay is turned off, and it is detected that a power grid voltage amplitude reaches the specified voltage range, a power grid voltage frequency reaches and remains within a specified frequency range for a specified time interval, the control chip determines that a current power grid voltage meets the on-grid condition, and sends power grid voltage information to the inverter, so that the inverter adjusts an output voltage amplitude and an output voltage frequency based on the power grid voltage information. Herein, accuracy of determining whether the on-grid condition is met is improved, thereby avoiding grid connection under an unstable working condition of a power grid.

In some feasible implementations, for a first relay and a second relay included in the on/off-grid controller, a maximum allowable impulse current of the second relay is greater than a maximum allowable impulse current of the first relay. The control chip in the on/off-grid controller is further configured to: first control the first relay to be turned on after sending the power grid voltage information to the inverter or after the inverter receives the power grid voltage information, and control the second relay to be turned on when the difference between the output voltage amplitude of the inverter and the power grid voltage amplitude, the difference between the output voltage frequency of the inverter and the power grid voltage frequency, and the difference between the output voltage phase of the inverter and the power grid voltage phase are all less than a specified threshold. The power supply system shown in FIG. 2 is used as an example. For the relay K1 and the relay K2 included in the on/off-grid controller, a maximum allowable impulse current of the relay K2 is greater than a maximum allowable impulse current of the relay K1. After sending the power grid voltage information to the inverter, or after the inverter receives the power grid voltage information, the control chip first controls the relay K1 to be turned on, and controls the relay K2 to be turned on when the difference between the output voltage amplitude of the inverter and the power grid voltage amplitude, the difference between the output voltage frequency of the inverter and the power grid voltage frequency, and the difference between the output voltage phase of the inverter and the power grid voltage phase are all less than the specified threshold. Herein, not all relays in the on/off-grid controller have high impulse current resistance, to reduce device costs. In addition, the two relays are not turned on at the same time, to protect a relay with low impulse current resistance.

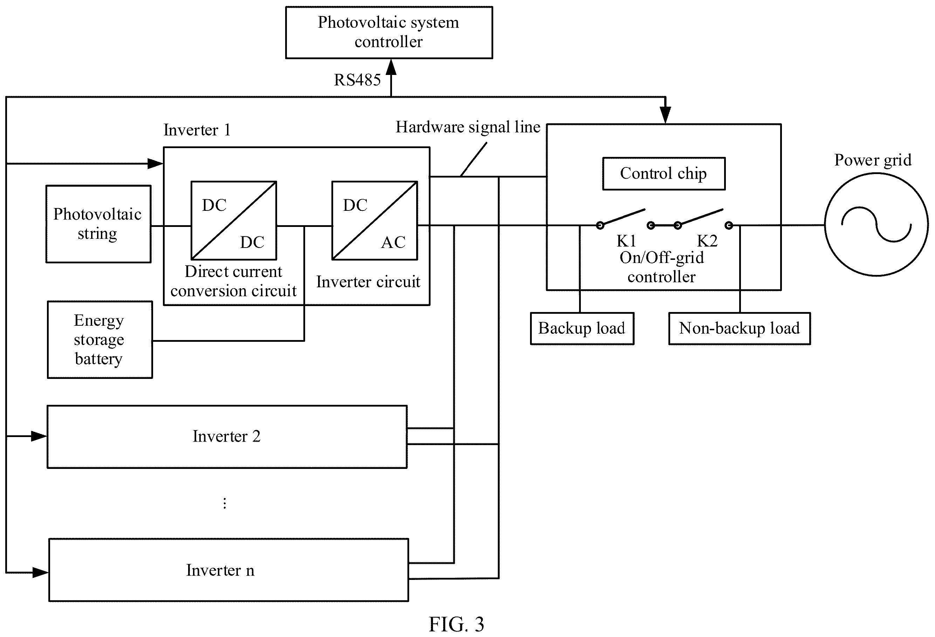

In some feasible implementations, the power supply system includes a plurality of inverters, and alternating current ends of the plurality of inverters are connected in parallel and then connected to an inverter port of the on/off-grid controller through an on-grid point. FIG. 3 is a diagram of another application scenario of a power supply system according to this application. As shown in FIG. 3, the power supply system includes a plurality of inverters: an inverter 1, an inverter 2, ..., and an inverter n, where n is an integer greater than 1. Direct current ends of the inverter 1, the inverter 2, ..., and the inverter n are configured to connect to a direct current power supply. Alternating current ends of the plurality of inverters are connected in parallel and then connected to an inverter port of an on/off-grid controller through an on-grid point. The plurality of inverters may include a direct current conversion circuit and an inverter circuit. For a specific connection relationship, refer to the description of FIG. 1. Details are not described herein again. The inverter 1, the inverter 2, ..., and the inverter n are further connected to the on/off-grid controller via a hardware signal line, and are communicatively connected to a photovoltaic system controller via RS485. When the inverter is in a voltage source control mode, a relay is turned off, and it is detected that a power grid voltage amplitude reaches a specified voltage range, a control chip determines that a current power grid voltage meets an on-grid condition, and sends power grid voltage information to the photovoltaic system controller, so as to send the power grid voltage information to the plurality of inverters by using the photovoltaic system controller. After receiving the power grid voltage information, the plurality of inverters switch to a virtual synchronous generator control mode, and adjust an output voltage amplitude and an output voltage frequency based on the power grid voltage information. Then, when a difference between an on-grid point voltage amplitude and the power grid voltage amplitude, a difference between an on-grid point voltage frequency and a power grid voltage frequency, and a difference between an on-grid point voltage phase and a power grid voltage phase are all less than a specified threshold, the control chip controls a relay K1 and a relay K2 to be turned on, and simultaneously outputs a high-level signal to the inverter 1, the inverter 2, ..., and the inverter n via the hardware signal line, so that the plurality of inverters switch to a current source control mode, and the plurality of inverters or a power grid is configured to jointly supply power to a backup load. This avoids a large current surge caused by an excessive voltage difference between the power grid and the inverter port, and resolves a problem of a circulating current between the plurality of inverters.

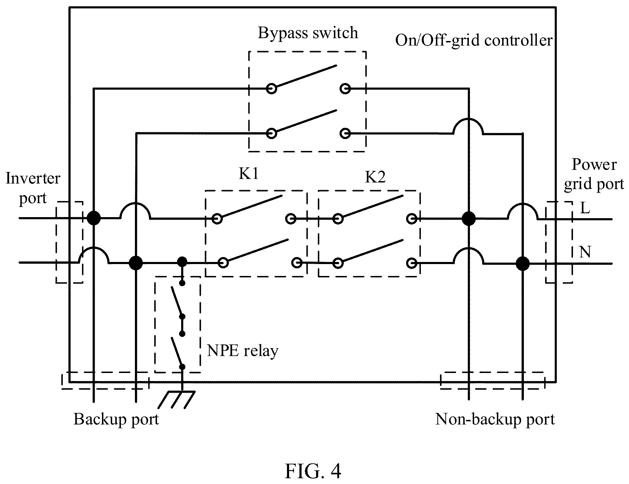

In some feasible implementations, if the inverter is a single-phase inverter, the foregoing on/off-grid controller may be a single-phase on/off-grid controller. FIG. 4 is a schematic of a hardware circuit of an on/off-grid controller according to this application. As shown in FIG. 4, the on/off-grid controller includes a first relay, namely, a relay K1. The relay K1 may include one relay on an L line, or include two relays on an L line and an N line. The on/off-grid controller further includes a second relay, namely, a relay K2. The relay K2 includes two relays on the L line and the N line, and the relay K1 and the relay K2 are connected in series. In addition, the on/off-grid controller further includes an NPE relay and a bypass switch. The NPE relay is connected to the N line, and the bypass switch is connected in parallel across two ends of the relay K1 and the relay K2 that are connected in series. Herein, when the relay K1 and the relay K2 are faulty, and consequently the on/off-grid controller cannot run normally, the bypass switch in the on/off-grid controller may be manually turned on, to restore power supply to a backup load. The NPE relay is designed to be turned on when the inverter is off-grid, that is, when the relay K1 and the relay K2 are turned off.

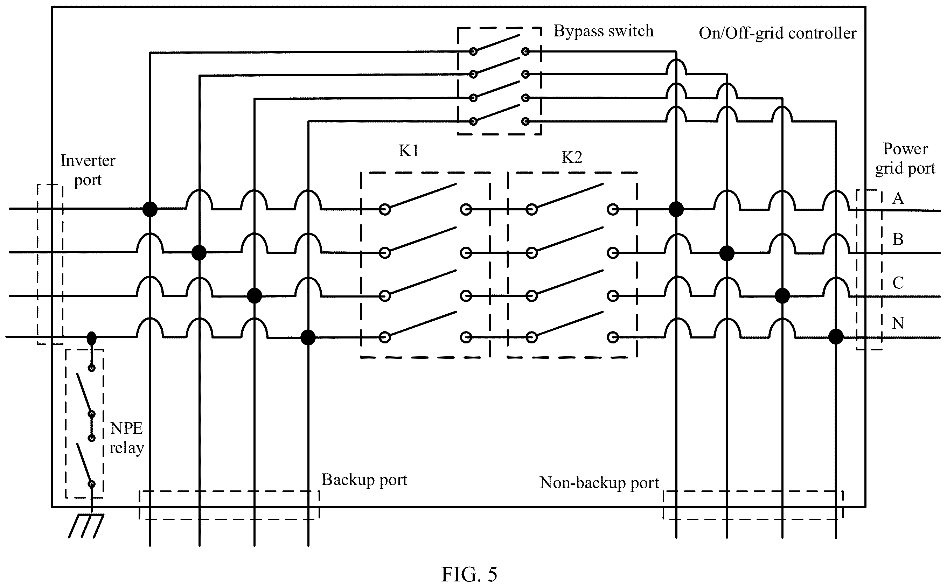

In some feasible implementations, if the inverter is a three-phase inverter, the foregoing on/off-grid controller may be a three-phase on/off-grid controller. FIG. 5 is a schematic of another hardware circuit of an on/off-grid controller according to this application. As shown in FIG. 5, the on/off-grid controller includes a first relay, namely, a relay K1. The relay K1 may include four relays on a phase A, a phase B, a phase C, and a phase N. The on/off-grid controller further includes a second relay, namely, a relay K2. The relay K2 may include four relays on the phase A, the phase B, the phase C, and the phase N. The relay K1 and relay K2 are connected in series. In addition, the on/off-grid controller further includes an NPE relay and a bypass switch. The NPE relay is connected to the N phase, and the bypass switch is connected in parallel across two ends of the relay K1 and the relay K2 that are connected in series. Herein, when the relay K1 and the relay K2 are faulty, and consequently the on/off-grid controller cannot run normally, the bypass switch in the on/off-grid controller may be manually turned on, to restore power supply to a backup load. The NPE relay is designed to be turned on when the inverter is off-grid, that is, when the relay K1 and the relay K2 are turned off.

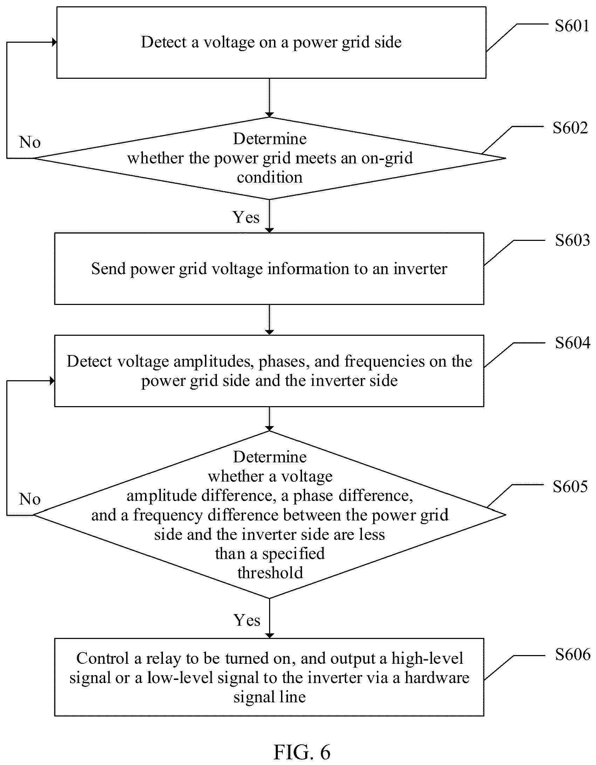

FIG. 6 is a schematic flowchart of a method for controlling off-grid to on-grid switching of a power supply system according to this application. The method for controlling off-grid to on-grid switching of the power supply system provided in this application is applicable to an off-grid to on-grid switching process of the inverter in any one of the power supply systems shown in FIG. 1 to FIG. 3. As shown in FIG. 6, the method for controlling off-grid to on-grid switching of the power supply system provided in this application includes the following steps.

S601: Detect a voltage on a power grid side.

S602: Determine whether the power grid meets an on-grid condition, and if the power grid meets the on-grid condition, perform step S603, or if the power grid does not meet the on-grid condition, perform step S601.

In some feasible implementations, during off-grid running of an inverter, a relay is turned off, and the inverter is in a voltage source control mode and supplies power only to a backup load. The power grid voltage is detected when the inverter is off-grid. If it is detected that a power grid voltage amplitude reaches a specified voltage range, it is determined that the current power grid voltage meets the on-grid condition. If it is detected that a power grid voltage amplitude does not reach a specified voltage range, the current power grid voltage does not meet the on-grid condition.

In some feasible implementations, the amplitude and a frequency of the power grid voltage are detected. If it is detected that the power grid voltage amplitude reaches the specified voltage range, and the power grid voltage frequency reaches and remains within a specified frequency range for a specified time interval, it is determined that the current power grid voltage meets the on-grid condition. If it is detected that the power grid voltage amplitude does not reach the specified voltage range, and the power grid voltage frequency does not reach and remain within a specified frequency range for a specified time interval, the current power grid voltage does not meet the on-grid condition. Herein, the power grid voltage amplitude, the power grid voltage frequency, and the time condition are combined, to improve accuracy of determining whether the on-grid condition is met, and avoid grid connection under an unstable working condition of the power grid.

S603: Send power grid voltage information to the inverter.

In some feasible implementations, after it is determined that the current power grid voltage meets the on-grid condition, the power grid voltage information is sent to the inverter, so that the inverter adjusts an output voltage amplitude and an output voltage frequency based on the power grid voltage information. After receiving the power grid voltage information, the inverter switches to a virtual synchronous generator control mode, and adjusts the output voltage amplitude and the output voltage frequency based on the power grid voltage information. Herein, the power grid voltage information may include the power grid voltage amplitude, the power grid voltage frequency, and a power grid voltage phase.

S604: Detect voltage amplitudes, phases, and frequencies on the power grid side and the inverter side.

S605: Determine whether a voltage amplitude difference, a phase difference, and a frequency difference between the power grid side and the inverter side are less than a specified threshold. If the voltage amplitude difference, the phase difference, and the frequency difference between the power grid side and the inverter side are less than the specified threshold, step S606 is performed. If the voltage amplitude difference, the phase difference, and the frequency difference between the power grid side and the inverter side are not less than the specified threshold, step S604 is performed.

S606: Control the relay to be turned on, and output a high-level signal or a low-level signal to the inverter via a hardware signal line.

In some feasible implementations, after the power grid voltage information is sent to the inverter, the voltage amplitudes, phases, and frequencies on the power grid side and the inverter side are detected. When a difference between the output voltage amplitude of the inverter and the power grid voltage amplitude, a difference between the output voltage frequency of the inverter and the power grid voltage frequency, and a difference between an output voltage phase of the inverter and the power grid voltage phase are all less than the specified threshold, the relay is controlled to be turned on, and the high-level signal or the low-level signal is simultaneously output to the inverter via the hardware signal line, so that the inverter switches from the voltage source control mode to a current source control mode. For example, the high-level signal is output to the inverter via the hardware signal line, so that the inverter switches to the current source control mode. During grid connection, the inverter or the power grid supplies power to the backup load and a non-backup load. Herein, it is determined, based on the amplitude difference, the frequency difference, the phase difference, and the like between an output voltage of the inverter and a power grid voltage, whether the inverter switches from an off-grid mode to an on-grid mode. This avoids a large current surge caused by an excessive voltage difference between the power grid and an inverter port, and resolves a problem of a circulating current during off-grid to on-grid switching of inverters connected in parallel, thereby improving device safety. In addition, when the relay is turned on, the high-level signal or the low-level signal is output to the inverter via the hardware signal line, and a transmission delay of the hardware signal line is within 1 ms. This greatly improves a transmission speed of an on-grid signal, so that the inverter quickly switches to the current source control mode and supplies power to the backup load, thereby improving power supply continuity for the backup load.

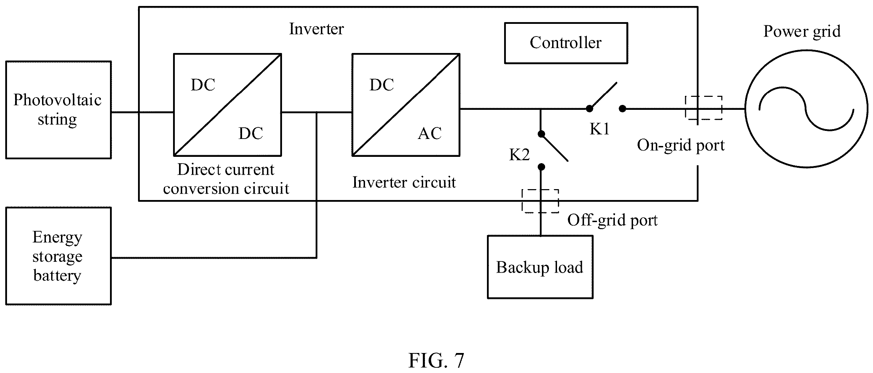

This application further provides an inverter. The inverter includes an inverter circuit, an on-grid relay, and an off-grid relay. A direct current end of the inverter is configured to connect to a direct current power supply, and an on-grid port of the inverter is connected to a power grid. An off-grid port of the inverter is configured to connect to a backup load, and an output end of the inverter circuit is connected to the on-grid port through the on-grid relay. The output end of the inverter circuit is connected to the off-grid port through the off-grid relay. FIG. 7 is a diagram of an application scenario of an inverter according to this application. As shown in FIG. 7, the inverter may include a direct current conversion circuit and an inverter circuit. An input end of the direct current conversion circuit is used as a direct current end of the inverter to connect to a photovoltaic string, and an output end of the direct current conversion circuit is connected to an input end of the inverter circuit. The inverter may further include a relay and a controller. For example, the inverter may include an on-grid relay and an off-grid relay (for ease of description, the on-grid relay is referred to as a relay Kl, and the off-grid relay is referred to as a relay K2). An output end of the inverter circuit is connected to an on-grid port through the relay K1, and the output end of the inverter circuit is connected to an off-grid port through the relay K2. The relay K1 and the relay K2 each may be a single relay, or may be a relay group including a plurality of relays. During off-grid running of the inverter, the relay K1 is turned off, the relay K2 is turned on, and the inverter is in a voltage source control mode and supplies power only to a backup load. When the inverter is in the voltage source control mode, the relay K1 is turned off, the relay K2 is turned on, and it is detected that a power grid voltage amplitude reaches a specified voltage range, or after a power grid voltage amplitude reaches a specified voltage range and a power grid voltage frequency reaches and remains within a specified frequency range for a specified time interval, the controller may determine that the current power grid voltage meets an on-grid condition. Then, an output voltage amplitude and an output voltage frequency at the off-grid port are adjusted based on power grid voltage information. The power grid voltage information may be obtained by the controller or from another device, and the power grid voltage information may include the power grid voltage amplitude, the power grid voltage frequency, and a power grid voltage phase. When a difference between the output voltage amplitude at the off-grid port and the power grid voltage amplitude, a difference between the output voltage frequency at the off-grid port and the power grid voltage frequency, and a difference between an output voltage phase at the off-grid port and a power grid voltage phase are all less than a specified threshold, the controller controls the relay K1 to be turned on, and controls the inverter to switch to a current source control mode. The inverter or a power grid is configured to jointly supply power to the backup load. Herein, it is determined, based on the amplitude difference, the frequency difference, the phase difference, and the like between an output voltage at the off-grid port and a power grid voltage, whether the inverter switches from an off-grid mode to an on-grid mode. This avoids a large current surge caused by an excessive difference between the power grid voltage and the output voltage at the off-grid port, and resolves a problem of a circulating current during off-grid to on-grid switching of inverters connected in parallel, thereby improving device safety. In addition, when the relay is turned on, the inverter is controlled to switch to the current source control mode and supply power to the backup load, thereby improving power supply continuity for the backup load.

## Claims

1. A power supply system, wherein the power supply system comprises an inverter and an on/off-grid controller, a direct current end of the inverter is configured to connect to a direct current power supply, and an alternating current end of the inverter is connected to an inverter port of the on/off-grid controller;
the on/off-grid controller comprises a relay and a control chip, a backup port of the on/off-grid controller is configured to connect to a backup load, a power grid port of the on/off-grid controller is configured to connect to a power grid, the backup port is connected to the inverter port, and the inverter port of the on/off-grid controller is connected to the power grid port through the relay;
the inverter is configured to supply power to the backup load when the inverter is in a voltage source control mode and the relay is turned off;
the inverter is further configured to: receive power grid voltage information, and adjust an output voltage amplitude and an output voltage frequency based on the power grid voltage information; and
the control chip is configured to: when a difference between the output voltage amplitude of the inverter and a power grid voltage amplitude, a difference between the output voltage frequency of the inverter and a power grid voltage frequency, and a difference between an output voltage phase of the inverter and a power grid voltage phase are all less than a specified threshold, control the relay to be turned on, and simultaneously output a high-level signal or a low-level signal to the inverter via a hardware signal line, so that the inverter switches to a current source control mode, wherein the inverter or the power grid is configured to jointly supply power to the backup load.

2. The power supply system according to claim 1, wherein the control chip is configured to send the power grid voltage information to the inverter when the relay is turned off and the power grid voltage amplitude reaches a specified voltage range.

3. The power supply system according to claim 1, wherein the control chip is configured to send the power grid voltage information to the inverter after the relay is turned off, the power grid voltage amplitude reaches a specified voltage range, and the power grid voltage frequency reaches and remains within a specified frequency range for a specified time interval.

4. The power supply system according to any one of claims 1 to 3, wherein the relay comprises a first relay and a second relay that are connected in series, the first relay is connected to the inverter port, the second relay is connected to the power grid port, and a maximum allowable impulse current of the second relay is greater than a maximum allowable impulse current of the first relay.

5. The power supply system according to claim 4, wherein the control chip is further configured to control the first relay to be turned on after the inverter receives the power grid voltage information; and
the control chip is further configured to control the second relay to be turned on when the difference between the output voltage amplitude of the inverter and the power grid voltage amplitude, the difference between the output voltage frequency of the inverter and the power grid voltage frequency, and the difference between the output voltage phase of the inverter and the power grid voltage phase are all less than the specified threshold.

6. The power supply system according to any one of claims 1 to 5, wherein the power supply system comprises a plurality of inverters, and alternating current ends of the plurality of inverters are connected in parallel and then connected to the inverter port of the on/off-grid controller through an on-grid point; and
the control chip is further configured to: when a difference between an on-grid point voltage amplitude and the power grid voltage amplitude, a difference between an on-grid point voltage frequency and the power grid voltage frequency, and a difference between an on-grid point voltage phase and the power grid voltage phase are all less than the specified threshold, control the relay to be turned on, and simultaneously output the high-level signal or the low-level signal to the inverter via the hardware signal line, so that the plurality of inverters switch to the current source control mode, wherein the plurality of inverters or the power grid is configured to jointly supply power to the backup load.

7. The power supply system according to any one of claims 1 to 6, wherein a non-backup port of the on/off-grid controller is configured to connect to a non-backup load, and the non-backup port is connected to the power grid port; and
the inverter is further configured to after the inverter switches to the current source control mode, enable the inverter or the power grid to jointly supply power to the backup load and the non-backup load.

8. A method for controlling off-grid to on-grid switching of a power supply system, comprising:
sending power grid voltage information to an inverter when a relay is turned off and a power grid voltage amplitude reaches a specified voltage range, so that the inverter adjusts an output voltage amplitude and an output voltage frequency based on the power grid voltage information; and
when a difference between the output voltage amplitude of the inverter and the power grid voltage amplitude, a difference between the output voltage frequency of the inverter and a power grid voltage frequency, and a difference between an output voltage phase of the inverter and a power grid voltage phase are all less than a specified threshold, controlling the relay to be turned on, and simultaneously outputting a high-level signal or a low-level signal to the inverter via a hardware signal line, so that the inverter switches to a current source control mode, wherein
a direct current end of the inverter is configured to connect to a direct current power supply, and an alternating current end of the inverter is connected to a power grid through the relay.

9. The method according to claim 8, wherein sending the power grid voltage information to the inverter when the relay is turned off and the power grid voltage amplitude reaches the specified voltage range comprises:
sending the power grid voltage information to the inverter after the relay is turned off, the power grid voltage amplitude reaches the specified voltage range, and the power grid voltage frequency reaches and remains within a specified frequency range for a specified time interval.

10. The method according to claim 8, wherein the relay comprises a first relay and a second relay that are connected in series, a maximum allowable impulse current of the second relay is greater than a maximum allowable impulse current of the first relay, and the method comprises:
sending the power grid voltage information to the inverter when the first relay and the second relay are turned off and the power grid voltage amplitude reaches the specified voltage range.

11. The method according to claim 10, wherein the method comprises:
controlling the first relay to be turned on after the inverter receives the power grid voltage information; and
controlling the second relay to be turned on when the difference between the output voltage amplitude of the inverter and the power grid voltage amplitude, the difference between the output voltage frequency of the inverter and the power grid voltage frequency, and the difference between the output voltage phase of the inverter and the power grid voltage phase are all less than the specified threshold.

12. An inverter, wherein the inverter comprises an inverter circuit, an on-grid relay, and an off-grid relay, a direct current end of the inverter is configured to connect to a direct current power supply, an on-grid port of the inverter is connected to a power grid, an off-grid port of the inverter is configured to connect to a backup load, an output end of the inverter circuit is connected to the on-grid port through the on-grid relay, and the output end of the inverter circuit is connected to the off-grid port through the off-grid relay;
the inverter is configured to supply power to the backup load when the inverter is in a voltage source control mode, the off-grid relay is turned on, and the on-grid relay is turned off;
the inverter is further configured to adjust an output voltage amplitude and an output voltage frequency at the off-grid port based on power grid voltage information; and
the inverter is further configured to: when a difference between the output voltage amplitude at the off-grid port and a power grid voltage amplitude, a difference between the output voltage frequency at the off-grid port and a power grid voltage frequency, and a difference between an output voltage phase at the off-grid port and a power grid voltage phase are all less than a specified threshold, control the on-grid relay to be turned on, and switch to a current source control mode, wherein the inverter or the power grid is configured to jointly supply power to the backup load.

13. The inverter according to claim 12, wherein the inverter is further configured to when the inverter is in the voltage source control mode, the off-grid relay is turned on, the on-grid relay is turned off, and the power grid voltage amplitude reaches a specified voltage range, adjust the output voltage amplitude and the output voltage frequency at the off-grid port based on the power grid voltage information.

14. The inverter according to claim 12, wherein the inverter is further configured to when the inverter is in the voltage source control mode, the off-grid relay is turned on, and the on-grid relay is turned off and after the power grid voltage amplitude reaches a specified voltage range, the power grid voltage frequency reaches and remains within a specified frequency range for a specified time interval, adjust the output voltage amplitude and the output voltage frequency at the off-grid port based on the power grid voltage information.
